# EUROPÄISCHE PATENTSCHRIFT

(11) **EP 3 472 921 B1**
(45) Veröffentlichungstag und Bekanntmachung des Hinweises auf die Patenterteilung: **28.04.2021**
(21) Anmeldenummer: 17728533.5
(22) Anmeldetag: 07.06.2017
(51) Int. Cl.: H02J 50/10, H02J 50/60

(54) **LADEVORRICHTUNG**
CHARGING DEVICE
CHARGEUR

(30) Priorität: 15.06.2016 DE 102016210641
(43) Veröffentlichungstag der Anmeldung: 24.04.2019
(73) Patentinhaber: Robert Bosch GmbH, 70442 Stuttgart (DE)
(72) Erfinder: GONDA, Martin, 77815 Buehl (DE); MACK, Juergen, 73035 Goeppingen (DE); KRUPEZEVIC, Dragan, 70565 Stuttgart (DE)
(86) Internationale Anmeldenummer: PCT/EP2017/063834
(87) Internationale Veröffentlichungsnummer: WO 2017/216009

(56) Entgegenhaltungen:
- WO-A1-2013/005860
- DE-A1-102012 112 953
- US-A1- 2014 111 019

## Beschreibung

### Stand der Technik

Es ist bereits eine induktive Akkuladevorrichtung für eine Handwerkzeugmaschine, mit zumindest einer Ladeeinheit zum drahtlosen Laden eines Energiespeichers und mit einer Recheneinheit, die zu einer Erkennung eines Störfaktors bei dem Laden mittels eines Vergleichs einer Ladekenngröße mit einem Normalwertebereich vorgesehen ist, vorgeschlagen worden.

WO2013005860 A1 zeigt eine Akkuladevorrichtung, die den Gütefaktor bei der Resonanzfrequenz zur Bestimmung von Fremdmaterial im Ladebereich einsetzt.

### Offenbarung der Erfindung

Die Erfindung geht aus von einer induktiven Akkuladevorrichtung nach Anspruch 1.

Es wird vorgeschlagen, dass die Recheneinheit dazu vorgesehen ist, den Normalwertebereich zumindest mittels zumindest einer Information aus dem Energiespeicher zu bestimmen.

Unter einer Ladevorrichtung soll in diesem Zusammenhang insbesondere ein, vorzugsweise funktionsfähiger, Bestandteil, insbesondere eine Unterbaugruppe und/oder eine Konstruktions- und/oder eine Funktionskomponente, eines insbesondere drahtlosen und/oder induktiven Ladegeräts verstanden werden. Insbesondere kann die Ladevorrichtung das gesamte Ladegerät umfassen. Der Energiespeicher weist eine wiederaufladbare Batterie, wie beispielsweise einen Akkupack, auf. Besonders vorteilhaft ist der Energiespeicher als ein Akkupack ausgebildet. Es ist auch denkbar, dass der Energiespeicher zumindest einen Superkondensator und/oder zumindest einen Kondensator und/oder zumindest eine Kombination zumindest eines Elektrolyseurs und einer Brennstoffzelle und vorteilhaft einen entsprechenden Tank für ein Reaktionsgas und/oder eine Reaktionsflüssigkeit wie beispielsweise Wasserstoff, Methan, Methanol oder dergleichen umfasst. Bevorzugt weist die tragbare Handwerkzeugmaschine zumindest eine Schnittstelle auf, die zu einer, insbesondere mechanischen und/oder elektrischen, Verbindung mit dem Energiespeicher, insbesondere werkzeuglos und/oder durch einen Bediener, vorgesehen ist. Vorzugsweise ist der Energiespeicher zu einer Verwendung mit einer Betriebsspannung von 36 V vorgesehen. Es ist aber auch denkbar, dass der Energiespeicher zu einer Verwendung mit einer Betriebsspannung von 9 V oder 18 V oder 24 V oder einer anderen, einem Fachmann als sinnvoll erscheinenden Betriebsspannung vorgesehen ist. Bevorzugt ist der Energiespeicher insbesondere werkzeuglos auswechselbar ausgebildet. Besonders bevorzugt ist der Energiespeicher zu einer Verwendung als Energiequelle einer Handwerkzeugmaschine vorgesehen. Unter einer "Handwerkzeugmaschine" soll in diesem Zusammenhang insbesondere eine werkstückbearbeitende Maschine, vorteilhaft jedoch eine Bohrmaschine, ein Bohr- und/oder Schlaghammer, ein Meißelhammer, eine Säge, ein Hobel, ein Schrauber, eine Fräse, ein Schleifer, ein Winkelschleifer, ein Gartengerät, ein Akkuschrauber und/oder ein Multifunktionswerkzeug verstanden werden.

Vorteilhaft weist die Ladeeinheit zumindest einen Ladestromkreis mit zumindest einem Ladeschwingkreis auf. Insbesondere umfasst der Ladeschwingkreis zumindest eine Ladespule. Vorzugsweise bildet die Ladeeinheit eine Oberfläche der Ladevorrichtung zumindest teilweise aus. Besonders vorteilhaft weist der Energiespeicher zumindest einen Empfängerkreis mit zumindest einem Empfängerschwingkreis auf. Insbesondere umfasst der Empfängerschwingkreis zumindest eine Empfängerspule. Vorzugsweise findet bei dem Laden eine induktive Energieübertragung zwischen der Ladeeinheit und dem Energiespeicher, bevorzugt zwischen der Ladespule und der Empfängerspule statt. Besonders bevorzugt wird bei dem Laden an den Energiespeicher übertragene Energie in einer Energiespeichereinheit des Energiespeichers wie beispielsweise einer Batterie oder einem Superkondensator gespeichert.

Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Unter einem "Störfaktor" soll in diesem Zusammenhang insbesondere zumindest ein bei dem Laden auftretender Umstand und/oder Sachverhalt verstanden werden, der einen Vorgang des Ladens von einem idealisierten und/oder idealen insbesondere störungsarmen oder störungsfreien Ladevorgang unterscheidet.

Unter einer "Ladekenngröße" soll in diesem Zusammenhang insbesondere zumindest ein vorzugsweise quantifizierbarer und/oder ein- oder mehrdimensionaler Parameter verstanden werden, welcher das Laden zumindest teilweise kennzeichnet. Vorteilhaft ist ein bestimmter Wert der Ladekenngröße einer bestimmten Situation und/oder bestimmten äußeren Umständen bei dem Laden zuordenbar. Besonders vorteilhaft ist aus einem bestimmten Wert der Ladekenngröße zumindest eine Wahrscheinlichkeit für ein Auftreten einer bestimmten Situation und/oder bestimmter äußerer Umstände ermittelbar. Unter einem "Normalwertebereich" soll in diesem Zusammenhang insbesondere eine Gesamtheit möglicher Werte der Ladekenngröße verstanden werden, die einen Normalladezustand kennzeichnen, insbesondere einen Normalladezustand, der frei von einem Störfaktor ist. Vorzugsweise ist die Information in dem Energiespeicher hinterlegt und/oder insbesondere wiederholt aus dem Energiespeicher abrufbar.

Vorzugsweise weist die Ladevorrichtung zumindest eine Sensoreinheit auf, die zu einer Erfassung zumindest eines Ladeparameters vorgesehen ist. Besonders bevorzugt ist die Sensoreinheit dazu vorgesehen, zumindest ein den Ladeparameter umfassendes Sensorsignal an die Recheneinheit zu übertragen. Vorteilhaft ist die Recheneinheit dazu vorgesehen, die Ladekenngröße zumindest anhand des Ladeparameters zu ermitteln. Alternativ oder zusätzlich ist es denkbar, dass die Recheneinheit dazu vorgesehen ist, die Ladekenngröße anhand zumindest eines Betriebsparameters der Ladeeinheit wie beispielsweise einer Frequenz und/oder einer Amplitude und/oder einer Phase einer Ladespannung und/oder einer Leistungsabgabe und/oder -aufnahme der Ladeeinheit zu ermitteln.

Vorteilhaft ist die Recheneinheit dazu vorgesehen, aufgrund eines Auftretens eines Werts der Ladekenngröße, der außerhalb des Normalwertebereichs liegt, den Störfaktor zu erkennen, insbesondere, falls der Wert über einen bestimmten Zeitraum, beispielsweise für mehr als 0,01 s oder für mehr als 0,1 s oder für mehr als 1 s oder für mehr als 10 s und/oder wiederholt innerhalb eines bestimmten Zeitraums auftritt.

Durch die erfindungsgemäße Ausgestaltung der Ladevorrichtung können vorteilhafte Eigenschaften hinsichtlich eines zuverlässigen und/oder fehlerfreien Ladens erzielt werden. Vorteilhaft können fehlerhafte Ladevorgänge vermieden werden. Ferner kann vorteilhaft eine Erkennung von Fremdkörper ermöglicht werden, welche einen Ladevorgang behindern oder verunmöglichen. Insbesondere kann eine schnelle und/oder zuverlässige und/oder präzise Fremdkörpererkennung ermöglicht werden. Außerdem kann eine fehlerhafte Positionierung und/oder eine Beschädigung eines zu ladenden Energiespeichers erkannt werden. Weiterhin können Ladeparameter trotz Fertigungsabweichungen und/oder wechselnder Umgebungsparameter zuverlässig erkannt und/oder angepasst werden. Vorteilhaft können verschiedene Energiespeicher mit derselben Ladevorrichtung geladen und/oder von derselben Ladevorrichtung erkannt werden. Insbesondere kann für verschiedene Kombinationen von Ladevorrichtungen und Energiespeichern eine zuverlässige Fremdkörpererkennung ermöglicht werden.

In einer vorteilhaften Ausgestaltung der Erfindung wird vorgeschlagen, dass der Störfaktor eine Anwesenheit eines Fremdobjekts, insbesondere eines Gegenstands in einem Nahbereich der Ladeeinheit ist. Unter einem "Nahbereich" soll in diesem Zusammenhang insbesondere ein Bereich mit Punkten mit einem Abstand von der Ladeeinheit verstanden werden, der kleiner als etwa 10 cm, vorteilhaft kleiner als etwa 5 cm und besonders vorteilhaft kleiner als etwa 2 cm ist. Beispielsweise kann der Störfaktor ein Vorhandensein eines bei dem Laden und/oder bei einem versuchten Laden zwischen der Ladeeinheit und dem Energiespeicher vorhandenen Fremdobjekts, insbesondere eines Gegenstands sein. Alternativ oder zusätzlich kann der Störfaktor ein Vorhandensein eines insbesondere induktiven und/oder magnetischen und/oder ferromagnetischen Gegenstands in dem Nahbereich, beispielsweise auf und/oder neben und/oder unter der Ladevorrichtung sein. Vorteilhaft ist die Recheneinheit dazu vorgesehen, im Fall der Erkennung des Störfaktors zumindest eine Benachrichtigung für einen Benutzer zu erstellen, beispielsweise in Form eines Warntons und/oder eines Lichtsignals und/oder einer Text- und/oder Bild- und/oder Symbolnachricht auf einem Display der Ladevorrichtung.

Entsprechend der Erfindung wird vorgeschlagen, dass die Information zumindest eine Kalibrationskurve insbesondere des Energiespeichers umfasst, welche innerhalb des Normalwertebereichs liegt. Die Recheneinheit ermittelt den Normalwertebereich aus einem zweidimensionalen Bereich um die Kalibrationskurve herum. Die Recheneinheit ermittelt den Normalwertebereich als eine Gesamtheit von Abweichungsintervallen ausgehend von Punkten der Kalibrationskurve. Vorteilhaft ist die Recheneinheit dazu vorgesehen, zwischen Punkten der Kalibrationskurve liegende Zwischenpunkte mittels zumindest einer Interpolation, beispielsweise mittels einer linearen oder einer polynomialen Interpolation zu ermitteln. Hierdurch kann vorteilhaft ein ordnungsgemäßes Laden basierend auf einer Eigenschaft eines zu ladenden Energiespeichers erkannt werden.

In einer bevorzugten Ausgestaltung der Erfindung wird vorgeschlagen, dass der Normalwertebereich und die Kalibrationskurve eine Abhängigkeit von einem Abstand zwischen dem Energiespeicher und der Ladeeinheit beim Laden aufweist. Insbesondere umfasst der Normalwertebereich Punkte, die einem Abstand zwischen 0 und 20 mm, vorteilhaft zwischen 0 und 10 mm und besonders vorteilhaft zwischen 0 und 6 mm entsprechen. Hierdurch kann vorteilhaft eine korrekte Positionierung eines Energiespeichers bei einem Laden erkannt werden.

Entsprechend der Erfindung wird vorgeschlagen, dass der Normalwertebereich Punkte einer bestimmten Resonanzfrequenz und eines bestimmten Gütefaktors, insbesondere eines Systems mit der Ladevorrichtung und dem Energiespeicher, umfasst. Die Kalibrationskurve umfasst eine bestimmte Anzahl von Punkten, welche jeweils durch einen bestimmten Wert des Gütefaktors und einen bestimmten Wert der Resonanzfrequenz gekennzeichnet sind. Insbesondere ist jeder Punkt der Kalibrationskurve einem bestimmten Abstand zwischen dem Energiespeicher und der Ladeeinheit zuordenbar. Der Normalwertebereich umfasst Punkte mit einer bestimmten Resonanzfrequenz und mit einem bestimmten Gütefaktor, die bei einem Laden des Energiespeichers in Abwesenheit eines Störfaktors und/oder in Anwesenheit von lediglich insignifikanten Störfaktoren üblicherweise auftreten können, für verschiedene Abstände zwischen der Ladeeinheit und dem Energiespeicher. Hierdurch kann vorteilhaft eine messbare und/oder quantifizierbare Kenngröße für eine Erkennung von Störfaktoren bei einem drahtlosen Laden herangezogen werden.

Ferner wird vorgeschlagen, dass die Ladevorrichtung eine Speichereinheit aufweist, in welcher zumindest ein Basiswertebereich der Ladeeinheit für eine Nullladekenngröße hinterlegt ist. Insbesondere ist der Basiswertebereich ein individueller Basiswertebereich der Ladeeinheit. Unter einer "Nullladekenngröße" soll in diesem Zusammenhang insbesondere zumindest ein vorzugsweise quantifizierbarer und/oder insbesondere ein- oder mehrdimensionaler Parameter verstanden werden, welcher einen Zustand der Ladeeinheit in Abwesenheit eines Energiespeichers, beispielsweise in einem Standby-Modus, zumindest teilweise kennzeichnet. Vorteilhaft ist ein bestimmter Wert der Nullladekenngröße einer bestimmten Situation und/oder bestimmten äußeren Umständen zuordenbar, beispielsweise einem Standby-Modus der Ladeeinheit bei bestimmten Umgebungsparametern, wie einer bestimmten Raumtemperatur und/oder einem bestimmten Luftdruck und/oder einer bestimmten Luftfeuchtigkeit und/oder einer Anwesenheit bestimmter Gegenstände in einer weiteren Umgebung der Ladeeinheit, insbesondere außerhalb des Nahbereichs der Ladeeinheit. Unter einem "Basiswertebereich" soll in diesem Zusammenhang insbesondere eine Gesamtheit möglicher Werte der Nullladekenngröße verstanden werden, die einen normalen, insbesondere störungsfreien Zustand der Ladeeinheit in Abwesenheit eines Energiespeichers, beispielsweise eines Standby-Modus, kennzeichnen. Hierdurch kann vorteilhaft eine produktspezifische Information einer Ladevorrichtung für eine präzise und/oder zuverlässige Zustandsüberwachung insbesondere abrufbereit hinterlegt werden.

Alternativ oder zusätzlich ist denkbar, dass die Ladevorrichtung eine Speichereinheit aufweist, in welcher zumindest ein Basiswert der Ladeeinheit für eine Nullladekenngröße hinterlegt ist. Vorteilhaft ist in diesem Fall die Recheneinheit dazu vorgesehen, einen Basiswertebereich der Ladeeinheit für die Nullladekenngröße aus dem Basiswert zu bestimmen, insbesondere als einen den Basiswert umgebenden Bereich.

Außerdem wird vorgeschlagen, dass die Recheneinheit zu einer Erkennung eines Nullladezustands der Ladeeinheit mittels eines Vergleichs der Nullladekenngröße mit dem Basiswertebereich vorgesehen ist. Vorzugsweise ist die Recheneinheit dazu vorgesehen, die Nullladekenngröße analog zu der Ladekenngröße zu ermitteln. Insbesondere entspricht die Nullladekenngröße der Ladekenngröße in Abwesenheit eines Energiespeichers und/oder in einem Standby-Modus der Ladeeinheit. Hierdurch kann vorteilhaft eine automatische Erkennung einer Standby-Situation ermöglicht werden.

Vorteilhafte Eigenschaften hinsichtlich eines zuverlässigen und/oder fehlerfreien Ladens können mit einem System erzielt werden, welche zumindest eine erfindungsgemäße Ladevorrichtung sowie zumindest einen Energiespeicher umfasst.

In einer vorteilhaften Ausgestaltung der Erfindung wird vorgeschlagen, dass der Energiespeicher zumindest eine Datenspeichereinheit aufweist, in welcher die Information hinterlegt ist. Bevorzugt weist die Datenspeichereinheit zumindest einen permanenten und/oder einen semi-permanenten insbesondere elektronischen und/oder magnetischen und/oder optischen Datenspeicher auf, der dazu vorgesehen ist, zumindest eine Information vorteilhaft von einer Stromversorgung unabhängig zu speichern. Hierdurch kann vorteilhaft bei und/oder zu einem Laden eine Parameteranpassung an einen individuellen Energiespeicher vorgenommen werden.

In einer besonders vorteilhaften Ausgestaltung der Erfindung wird vorgeschlagen, dass der Normalwertebereich ein individueller Normalwertebereich des Energiespeichers ist. Insbesondere umfasst der Normalwertebereich zumindest eine insbesondere unmittelbar nach einer Fertigung des Energiespeichers ermittelbare individuelle Kalibrationskurve des Energiespeichers. Hierdurch kann vorteilhaft eine Anpassung einer Ladevorrichtung an einen individuellen Energiespeicher und besonders vorteilhaft an dessen Charakteristika ermöglicht werden.

Weiterhin wird vorgeschlagen, dass der Energiespeicher zu einer insbesondere drahtlosen Übertragung der Information an die Ladevorrichtung vorgesehen ist. Vorteilhaft stellt der Energiespeicher der Ladevorrichtung die Information zu einem Auslesen bereit. Es ist aber auch denkbar, dass der Energiespeicher zumindest eine Datenübertragungseinheit aufweist, die zu einem Aussenden der Information insbesondere an die Ladevorrichtung vorgesehen ist. Hierdurch kann vorteilhaft eine individuelle Information von einem Energiespeicher an eine Ladevorrichtung weitergegeben werden.

Außerdem umfasst die Erfindung ein Verfahren zur Erstkalibration eines erfindungsgemäßen Systems entsprechend Anspruch 9, wobei in zumindest einem Kalibrationsschritt, vorzugsweise nach einer Fertigung des Energiespeichers und besonders bevorzugt vor einer Auslieferung und/oder vor einem Verkauf und/oder Versand des Energiespeichers eine Kalibrationskurve für den Energiespeicher bestimmt wird.

Hierdurch kann vorteilhaft eine Anpassung eines Ladevorgangs an verschiedene Energiespeicher und/oder an fabrikationsbedingte Abweichungen ermöglicht werden.

In einer vorteilhaften Ausgestaltung der Erfindung wird vorgeschlagen, dass in dem Kalibrationsschritt eine Resonanzfrequenz und ein Gütefaktor eines Kalibrationssystems, welches einen Energiespeicher und eine Kalibrationsladeeinheit umfasst, für zumindest zwei, beispielsweise für drei oder für vier oder für fünf oder für zehn oder für 20 oder für 50 oder für 100 oder für mehrere oder für eine Vielzahl verschiedene Abstände zwischen dem Energiespeicher und der Kalibrationsladeeinheit bestimmt werden. Punkte mit einem bestimmten Wert der Resonanzfrequenz und einem bestimmten Wert des Gütefaktors und/oder eine an die Punkte angepasste Funktion und/oder zwischen den Punkten liegende interpolierte Kurvenstücke bilden die Kalibrationskurve. Vorzugsweise ist die Kalibrationsladeeinheit zumindest im Wesentlichen identisch zu der Ladeeinheit ausgebildet. Besonders bevorzugt ist die Kalibrationsladeeinheit Teil einer Kalibrationsladevorrichtung, die zumindest im Wesentlichen identisch zu der Ladevorrichtung ausgebildet ist. Unter "zumindest im Wesentlichen identischen" Objekten soll in diesem Zusammenhang insbesondere verstanden werden, dass die Objekte derart konstruiert sind, dass sie jeweils eine gemeinsame Funktion erfüllen können und sich in ihrer Konstruktion abgesehen von Fertigungstoleranzen höchstens durch einzelne Elemente unterscheiden, die für die gemeinsame Funktion unwesentlich sind. Hierdurch kann vorteilhaft eine einem individuellen Energiespeicher zuordenbare Grundlage für eine Erkennung von Störfaktoren bei einem Ladevorgang des Energiespeichers bereitgestellt werden.

In einer besonders vorteilhaften Ausgestaltung der Erfindung wird vorgeschlagen, dass in zumindest einem Hinterlegungsschritt eine Information in dem Energiespeicher vorzugsweise permanent hinterlegt wird, welche die Kalibrationskurve umfasst, die insbesondere in dem Kalibrationsschritt ermittelt wurde. Vorteilhaft wird die Information in dem Hinterlegungsschritt in den Datenspeicher der Datenspeichereinheit des Energiespeichers geschrieben und/oder für ein Auslesen durch die Ladevorrichtung in dem Energiespeicher, insbesondere in der Datenspeichereinheit des Energiespeichers, hinterlegt.

Außerdem wird vorgeschlagen, dass in zumindest einem weiteren Kalibrationsschritt ein Gütefaktor und eine Resonanzfrequenz der Ladeeinheit in Abwesenheit eines Energiespeichers zur Festlegung eines Basiswertebereichs und/oder eines Basiswerts für eine Nullladekenngröße vorzugsweise nach einer Fertigung der Ladeeinheit und besonders bevorzugt vor einer Auslieferung und/oder vor einem Verkauf und/oder Versand der Ladevorrichtung bestimmt werden. Vorteilhaft wird in zumindest einem weiteren Hinterlegungsschritt der Basiswertebereich und/oder der Basiswert in der Ladevorrichtung, insbesondere in der Speichereinheit der Ladevorrichtung hinterlegt. Hierdurch kann vorteilhaft eine Information für eine Erkennung eines Standby-Zustands erzeugt und mit einer Ladevorrichtung verknüpft werden.

Die erfindungsgemäße Ladevorrichtung soll hierbei nicht auf die oben beschriebene Anwendung und Ausführungsform beschränkt sein. Insbesondere kann die erfindungsgemäße Ladevorrichtung zu einer Erfüllung einer hierin beschriebenen Funktionsweise eine von einer hierin genannten Anzahl von einzelnen Elementen, Bauteilen und Einheiten abweichende Anzahl aufweisen.

Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein System mit einer Ladevorrichtung und mit einem Energiespeicher in einer perspektivischen Darstellung,
- Fig. 2: einen Normalwertebereich und eine Kalibrationskurve des Energiespeichers in einem Resonanzfrequenz-Gütefaktor-Diagramm und
- Fig. 3: ein Ablaufdiagramm eines Verfahrens zur Erstkalibration eines des Systems.

### Beschreibung des Ausführungsbeispiels

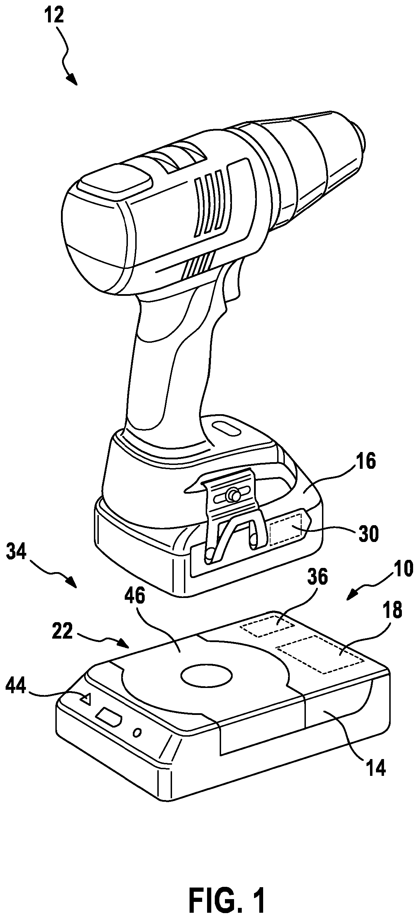

Die Figur 1 zeigt ein System 34 mit einer Ladevorrichtung 10 und mit einem Energiespeicher 16 in einer perspektivischen Darstellung. Der Energiespeicher 16 ist als ein auswechselbarer Energiespeicher einer Handwerkzeugmaschine 12 ausgebildet. Der Energiespeicher 16 ist als ein Akkupack ausgebildet. Die Ladevorrichtung 10 ist als eine induktive Akkuladevorrichtung ausgebildet. Die Ladevorrichtung 10 weist eine Ladeeinheit 14 auf, die zu einem drahtlosen Laden des Energiespeichers 16 vorgesehen ist, insbesondere mittels einer vorteilhaft resonanten induktiven Kopplung. Die Ladevorrichtung 10 weist eine Recheneinheit 18 auf, die zu einer Erkennung zumindest eines Störfaktors bei dem Laden zumindest mittels eines Vergleichs zumindest einer Ladekenngröße mit zumindest einem Normalwertebereich 20 vorgesehen ist. Ferner ist die Recheneinheit 18 dazu vorgesehen, den Normalwertebereich 20 zumindest mittels zumindest einer Information aus dem Energiespeicher 16 zu bestimmen.

Die Ladevorrichtung 10 weist ein Anzeigeleuchtmittel 44 auf, welches im vorliegenden Fall als ein LED ausgebildet ist. Im Fall einer Erkennung eines Störfaktors aktiviert die Recheneinheit 18 das Anzeigeleuchtmittel 44, um einen Benutzer über ein Vorhandensein des Störfaktors zu informieren, beispielsweise mittels eines Blinkens des Anzeigeleuchtmittels 44. Alternativ oder zusätzlich kann eine Ladevorrichtung ein Display und/oder einen Tongeber zu einer Benutzerinformation aufweisen.

Zu dem Laden des Energiespeichers 16 kann der Energiespeicher 16 auf die Ladevorrichtung 10 gestellt oder gelegt werden. Bei dem Laden findet eine induktive Energieübertragung zwischen der Ladeeinheit 14 und dem Energiespeicher 16 statt.

Der Störfaktor ist eine Anwesenheit eines Fremdobjekts in einem Nahbereich 22 der Ladeeinheit 14. Bei dem Fremdobjekt kann es sich um einen beliebigen von der Handwerkzeugmaschine 12, dem Energiespeicher 16 und der Ladevorrichtung 10 verschiedenen, beispielsweise um einen auf einer Oberfläche 46 der Ladevorrichtung 10 liegenden oder stehenden und insbesondere zwischen der Ladevorrichtung 10 und dem Energiespeicher 16 angeordneten Gegenstand handeln.

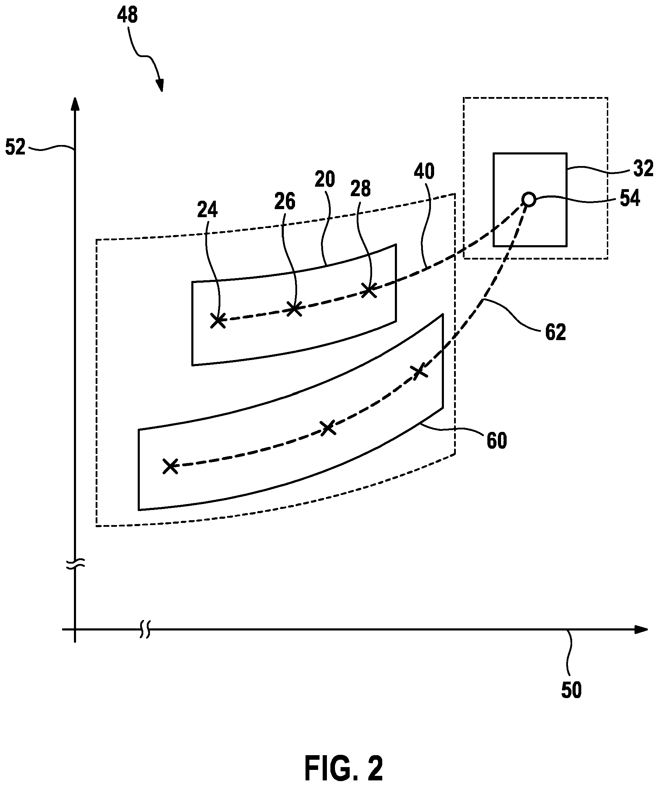

Bei dem Laden bilden der Energiespeicher 16 und die Ladevorrichtung 10, insbesondere die Ladeeinheit 14 der Ladevorrichtung 10 einen elektrischen Ladekreis aus, der bei dem Laden durch einen bestimmten Gütefaktor und eine bestimmte Resonanzfrequenz gekennzeichnet ist, die von Umgebungsparametern und/oder von einem Abstand zwischen der Ladeeinheit 14 und dem Energiespeicher 16 abhängen. In der Figur 2 ist ein beispielhaftes Resonanzfrequenz-Gütefaktor-Diagramm 48 mit einer Resonanzfrequenz-Achse 50 und mit einer Gütefaktor-Achse 52 gezeigt. Das Laden ist durch die Ladekenngröße gekennzeichnet, die zu jedem Zeitpunkt des Ladens einen bestimmten Wert annimmt, der einem bestimmten Punkt in dem Diagramm 48 entspricht. Die Ladevorrichtung 10 ist dazu vorgesehen, die Ladekenngröße zu erfassen, beispielsweise mittels geeigneter Sensoren. In dem Diagramm 48 ist der Normalwertebereich 20 des Energiespeichers 16 eingezeichnet. Der Normalwertebereich 20 umfasst Punkte 24, 26, 28 einer bestimmten Resonanzfrequenz und eines bestimmten Gütefaktors. Aus Gründen einer Übersichtlichkeit sind lediglich drei Punkte 24, 26, 28 mit Bezugszeichen versehen. Tatsächlich umfasst der Normalwertebereich 20 selbstverständlich kontinuierlich verteilte und somit unendlich viele Punkte, die innerhalb von den Normalwertebereich 20 kennzeichnenden Grenzen liegen.

Die Information umfasst zumindest eine Kalibrationskurve 40, welche innerhalb des Normalwertebereichs 20 liegt. Die Kalibrationskurve 40 ist eine individuelle Kalibrationskurve des Energiespeichers 16. Der Energiespeicher 16 weist eine Datenspeichereinheit 36 auf, in welcher die Information hinterlegt ist (vgl. Figur 1). Im vorliegenden Fall weist die Datenspeichereinheit 36 einen permanenten elektronischen Speicher auf. Es sind aber auch alternative Speicher wie etwa optische Speicher oder magnetische Speicher denkbar. Der Energiespeicher 16 ist zu einer Übertragung der Information an die Ladevorrichtung 10 vorgesehen. Im vorliegenden Fall ist die Datenspeichereinheit 36 für die Übertragung von der Ladevorrichtung 10 auslesbar ausgebildet. Es ist aber auch denkbar, dass ein Energiespeicher eine Information an eine Ladevorrichtung aussendet.

Der Normalwertebereich 20 ist ein individueller Normalwertebereich des Energiespeichers 16. Die Recheneinheit 18 bestimmt den Normalwertebereich 20 als einen Bereich um die Kalibrationskurve 40 herum, indem ausgehend von beliebigen Punkten 24, 26, 28 der Kalibrationskurve 40, von denen aus Gründen einer Übersichtlichkeit lediglich drei gekennzeichnet sind, Abweichungsintervalle definiert werden, die gemeinsam den Normalwertebereich 20 ausbilden. Alternativ oder zusätzlich ist denkbar, dass eine Recheneinheit einen Normalwertebereich anhand einer Steigung und/oder eines Integrals und/oder eines Verlaufs einer Kalibrationskurve ermittelt und/oder zur Ermittlung des Normalwertebereichs zusätzlich feste Grenzwerte für einen Gütefaktor und/oder eine Resonanzfrequenz heranzieht.

Der Normalwertebereich 20 weist eine Abhängigkeit von einem Abstand zwischen dem Energiespeicher 16 und der Ladeeinheit 14 beim Laden auf. Im vorliegenden Fall entspricht ein erster Punkt 24 der Kalibrationskurve 40 einem Abstand von etwa 0 mm, ein zweiter Punkt 26 einem Abstand von etwa 2 mm und ein dritter Punkt 28 einem Abstand von etwa 4 mm.

Die Ladevorrichtung 10 weist eine Speichereinheit 30 auf, in welcher zumindest ein Basiswertebereich 32 der Ladeeinheit 14 für eine Nullladekenngröße hinterlegt ist (vgl. Figur 1). Die Nullladekenngröße entspricht im vorliegenden Fall einer Ladekenngröße bei einer Abwesenheit einer Energiespeichereinheit, insbesondere in einem Standby-Modus der Ladeeinheit 14. Der Basiswertebereich 32 umfasst einen Basiswert 54, welche die Nullladekenngröße in dem Standby-Modus in Abwesenheit eines Störfaktors annimmt. Die Ladevorrichtung 10 ist im vorliegenden Fall dazu vorgesehen, die Nullladekenngröße analog zu der Ladekenngröße, insbesondere als die Ladekenngröße zu ermitteln.

Ermittelt die Recheneinheit 18 bei dem Vergleich der Ladekenngröße mit dem Normalwertebereich 20, dass die Ladekenngröße innerhalb des Normalwertebereichs 20 liegt, wird auf eine Abwesenheit eines Störfaktors und/oder auf ein störungsfreies Laden geschlossen. Ermittelt die Recheneinheit 18 bei dem Vergleich der Ladekenngröße mit dem Basiswertebereich 32, dass die Ladekenngröße innerhalb des Basiswertebereichs 32 liegt, wird auf eine Abwesenheit eines Störfaktors und/oder auf einen störungsfreien Standby-Zustand geschlossen.

Ermittelt die Recheneinheit 18 bei dem Vergleich der Ladekenngröße mit dem Normalwertebereich 20, dass die Ladekenngröße außerhalb des Normalwertebereichs 20 und insbesondere zusätzlich außerhalb des Basiswertebereichs 32 liegt, wird auf die Anwesenheit eines Störfaktors geschlossen. Im vorliegenden Fall ist die Recheneinheit 18 dazu vorgesehen, zusätzlich zu der Ladekenngröße eine Verbrauchskenngröße, welche eine Leistungsabgabe der Ladeeinheit 14 kennzeichnet, zu verarbeiten. Es kann beispielsweise ebenfalls auf eine Anwesenheit eines Störfaktors geschlossen werden, falls die Ladekenngröße außerhalb des Normalwertebereichs 20 liegt und die Verbrauchskenngröße ein Laden eines Energiespeichers anzeigt und/oder falls die Ladekenngröße außerhalb des Basiswertebereichs 32 liegt und die Verbrauchskenngröße einen Standby-Zustand der Ladeeinheit anzeigt.

Beispielhaft sind in der Figur 2 ein weiterer Normalwertebereich 60 sowie eine weitere Kalibrationskurve 62 eines nicht gezeigten weiteren Energiespeichers gezeigt. Aufgrund der Bestimmung des weiteren Normalwertebereichs 60 aus der weiteren Kalibrationskurve 62 kann bei einem Laden des weiteren Energiespeichers analog zu dem Laden des Energiespeichers 16 eine zuverlässige Fremdkörpererkennung durchgeführt werden, indem die Recheneinheit 18 eine entsprechende Ladekenngröße mit dem weiteren Normalwertebereich 60 vergleicht.

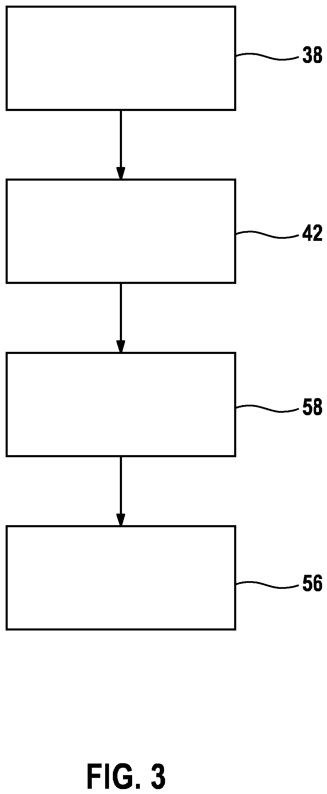

Die Figur 3 zeigt ein schematisches Ablaufdiagramm eines Verfahrens zur Erstkalibration des Systems 34. In einem Kalibrationsschritt 38 wird die Kalibrationskurve 40 für den Energiespeicher 16 bestimmt. In dem Kalibrationsschritt 38 werden eine Resonanzfrequenz und ein Gütefaktor eines nicht dargestellten Kalibrationssystems, welches den Energiespeicher 16 und eine Kalibrationsladeeinheit umfasst, für zumindest zwei verschiedene Abstände zwischen dem Energiespeicher 16 und der Kalibrationsladeeinheit bestimmt. Für jeden gegebenen Abstand wird ein Punkt 24, 26, 28 der Kalibrationskurve 40 ermittelt (vgl. Figur 2). Die Kalibrationsladeeinheit ist im vorliegenden Fall ein Teil einer Kalibrationsladevorrichtung, die zumindest im Wesentlichen identisch zu der Ladevorrichtung 10 ausgebildet ist. Der Kalibrationsschritt 38 wird nach einer Fertigung des Energiespeichers 16 durchgeführt.

In zumindest einem Hinterlegungsschritt 42 wird die Information in dem Energiespeicher 16 hinterlegt. Die Information umfasst die Kalibrationskurve 40. Die Information ist nach Hinterlegung in dem Energiespeicher 16 von der Ladevorrichtung 10 abfragbar.

In zumindest einem weiteren Kalibrationsschritt 58 werden ein Gütefaktor und eine Resonanzfrequenz der Ladeeinheit 14 in Abwesenheit eines Energiespeichers zur Festlegung des Basiswertebereichs 32 für eine Nullladekenngröße bestimmt. Im vorliegenden Fall wird in Abwesenheit eines Energiespeichers der Basiswert 54 bestimmt. Anhand des Basiswerts 54 wird der Basiswertebereich 32 bestimmt. Der Basiswertebereich 32 ist ein individueller Basiswertebereich der Ladeeinheit 14.

In zumindest einem weiteren Hinterlegungsschritt 56 wird der Basiswertebereich 32 in der Speichereinheit 30 der Ladevorrichtung 10 hinterlegt.

## Patentansprüche

1. Induktive Akkuladevorrichtung (10), insbesondere für eine Handwerkzeugmaschine (12), mit einer Ladeeinheit (14) zum drahtlosen Laden eines Energiespeichers (16) und mit einer Recheneinheit (18), die zu einer Erkennung eines Störfaktors beim Laden mittels eines Vergleichs einer Ladekenngröße mit einem Normalwertebereich (20) vorgesehen ist, wobei die Recheneinheit (18) dazu vorgesehen ist, den Normalwertebereich (20) mittels einer Information aus dem Energiespeicher (16) zu bestimmen, und wobei die Information eine Kalibrationskurve (40) umfasst, welche innerhalb des Normalwertebereichs (20) liegt und welche Punkte (24, 26, 28) umfasst, die einen bestimmten Gütefaktor bei einer bestimmten Resonanzfrequenz für verschiedene Abstände des Energiespeichers (16) zur Ladeeinheit (14) in Abwesenheit des Störfaktors oder bei insignifikantem Störfaktor charakterisieren, **dadurch gekennzeichnet, dass die** Recheneinheit (18) Abweichungsintervalle definiert, mittels derer sie den Normalwertebereich (20) aus der Kalibrationskurve (40) als zweidimensionalen Bereich einer Gesamtheit der Abweichungsintervalle um die Punkte (24, 26, 28) der Kalibrationskurve (40) herum ermittelt.

2. Ladevorrichtung (10) nach Anspruch 1, **dadurch gekennzeichnet, dass** der Störfaktor eine Anwesenheit eines Fremdobjekts in einem Nahbereich (22) der Ladeeinheit (14) ist.

3. Akkuladevorrichtung (10) nach einem der vorhergehenden Ansprüche, **gekennzeichnet durch** eine Speichereinheit (30), in welcher zumindest ein Basiswertebereich (32) der Ladeeinheit (14) für eine Nullladekenngröße hinterlegt ist.

4. Akkuladevorrichtung (10) nach Anspruch 3, **dadurch gekennzeichnet, dass** die Recheneinheit (18) zu einer Erkennung eines Nullladezustands der Ladeeinheit (14) mittels eines Vergleichs der Nullladekenngröße mit dem Basiswertebereich (32) vorgesehen ist.

5. System (34) mit zumindest einer induktiven Akkuladevorrichtung (10) nach einem der vorhergehenden Ansprüche und mit zumindest einem Energiespeicher (16).

6. System (34) nach Anspruch 5, **dadurch gekennzeichnet, dass** der zumindest eine Energiespeicher (16) eine Datenspeichereinheit (36) aufweist, in welcher die Information hinterlegt ist.

7. System (34) nach Anspruch 5 oder 6, **dadurch gekennzeichnet, dass** der Normalwertebereich (20) ein individueller Normalwertebereich des zumindest einen Energiespeichers (16) ist.

8. System (34) nach einem der Ansprüche 5 bis 7, **dadurch gekennzeichnet, dass** der zumindest eine Energiespeicher (16) zu einer Übertragung der Information an die Akkuladevorrichtung (10) vorgesehen ist.

9. Verfahren zur Erstkalibration eines Systems (34) nach einem der Ansprüche 5 bis 8, wobei in einem Kalibrationsschritt (38) eine Kalibrationskurve (40) für den Energiespeicher (16) derart bestimmt wird, dass die Kalibrationskurve (40) Punkte (24, 26, 28) umfasst, die einen bestimmten Gütefaktor bei einer bestimmten Resonanzfrequenz für verschiedene Abstände des zumindest einen Energiespeichers (16) zu einer Kalibrationsladeeinheit in Abwesenheit eines Störfaktors oder bei insignifikantem Störfaktor charakterisieren, und dass in einem Hinterlegungsschritt (42) eine Information in dem zumindest einen Energiespeicher (16) hinterlegt wird, welche die Kalibrationskurve (40) umfasst.

10. Verfahren nach Anspruch 9, **dadurch gekennzeichnet, dass** in einem weiteren Kalibrationsschritt (58) ein Gütefaktor und eine Resonanzfrequenz der Ladeeinheit (14) in Abwesenheit des zumindest einen Energiespeichers (16) zur Festlegung eines Basiswertebereichs (32) für eine Nullladekenngröße bestimmt werden.

## Claims

1. Inductive rechargeable battery charging device (10), in particular for a handheld power tool (12), having a charging unit (14) for wirelessly charging an energy store (16) and having a computation unit (18), which is provided to identify an interference factor during charging by means of a comparison of a charging characteristic variable with a normal value range (20), wherein the computation unit (18) is provided to determine the normal value range (20) by means of a piece of information from the energy store (16), and wherein the piece of information includes a calibration curve (40), which lies within the normal value range (20) and which includes points (24, 26, 28) that characterize a specific quality factor at a specific resonant frequency for different distances between the energy store (16) and the charging unit (14) in the absence of the interference factor or in the case of an insignificant interference factor, **characterized in that** the computation unit (18) defines discrepancy ranges by means of which it identifies the normal value range (20) from the calibration curve (40) as a two-dimensional range of the entirety of the discrepancy ranges around the points (24, 26, 28) of the calibration curve (40).

2. Charging device (10) according to Claim 1, **characterized in that** the interference factor is a presence of a foreign object in the vicinity (22) of the charging unit (14).

3. Rechargeable battery charging device (10) according to either of the preceding claims, **characterized by** a storage unit (30), in which at least one base value range (32) of the charging unit (14) for a zero-charge characteristic variable is stored.

4. Rechargeable battery charging device (10) according to Claim 3, **characterized in that** the computation unit (18) is provided to identify a zero-charge state of the charging unit (14) by means of a comparison of the zero-charge characteristic variable with the base value range (32) .

5. System (34) having at least one inductive rechargeable battery charging device (10) according to one of the preceding claims and having at least one energy store (16).

6. System (34) according to Claim 5, **characterized in that** the at least one energy store (16) has a data storage unit (36), in which the piece of information is stored.

7. System (34) according to Claim 5 or 6, **characterized in that** the normal value range (20) is an individual normal value range of the at least one energy store (16).

8. System (34) according to one of Claims 5 to 7, **characterized in that** the at least one energy store (16) is provided to transmit the piece of information to the rechargeable battery charging device (10).

9. Method for first calibrating a system (34) according to one of Claims 5 to 8, wherein, in a calibration step (38), a calibration curve (40) for the energy store (16) is determined in such a way that the calibration curve (40) includes points (24, 26, 28) that characterize a specific quality factor at a specific resonant frequency for different distances between the at least one energy store (16) and a calibration charging unit in the absence of an interference factor or in the case of an insignificant interference factor and in that, in a storage step (42), a piece of information that includes the calibration curve (40) is stored in the at least one energy store (16).

10. Method according to Claim 9, **characterized in that**, in a further calibration step (58), a quality factor and a resonant frequency of the charging unit (14) are determined in the absence of the at least one energy store (16) in order to specify a base value range (32) for a zero-charge characteristic variable.

## Revendications

1. Chargeur de batterie à induction (10), en particulier pour une machine-outil portative (12), comprenant une unité de charge (14) pour la charge sans fil d'un accumulateur d'énergie (16) et une unité de calcul (18), qui est destinée à identifier un facteur perturbateur lors de la charge à l'aide d'une comparaison entre une grandeur caractéristique de charge et une plage de valeurs normales (20), dans lequel l'unité de calcul (18) est destinée à déterminer la plage de valeurs normales (20) à l'aide d'une information issue de l'accumulateur d'énergie (16), et dans lequel l'information comprend une courbe d'étalonnage (40) qui se situe dans la plage de valeurs normales (20) et qui comprend des points (24, 26, 28) qui caractérisent un facteur de qualité déterminé à une fréquence de résonance déterminée pour différentes distances de l'accumulateur d'énergie (16) par rapport à l'unité de charge (14) en l'absence du facteur perturbateur ou lorsque le facteur perturbateur est insignifiant,
**caractérisé en ce que** l'unité de calcul (18) définit des intervalles d'écart à l'aide desquels elle détermine la plage de valeurs normales (20) de la courbe d'étalonnage (40) sous forme d'une plage bidimensionnelle d'une totalité des intervalles d'écart autour des points (24, 26, 28) de la courbe d'étalonnage (40).

2. Chargeur (10) selon la revendication 1, **caractérisé en ce que** le facteur perturbateur est la présence d'un objet étranger dans une zone proche (22) de l'unité de charge (14).

3. Chargeur de batterie (10) selon l'une des revendications précédentes, **caractérisé par** une unité de mémoire (30) dans laquelle est stockée au moins une plage de valeurs de base (32) de l'unité de charge (14) pour une grandeur caractéristique de charge nulle.

4. Chargeur de batterie (10) selon la revendication 3, **caractérisé en ce que** l'unité de calcul (18) est destinée à identifier un état de charge nulle de l'unité de charge (14) à l'aide d'une comparaison entre la grandeur caractéristique de charge nulle et la plage de valeurs de base (32).

5. Système (34) comprenant au moins un chargeur de batterie à induction (10) selon l'une des revendications précédentes et comprenant au moins un accumulateur d'énergie (16).

6. Système (34) selon la revendication 5, **caractérisé en ce que** ledit au moins un accumulateur d'énergie (16) comporte une unité de stockage de données (36) dans laquelle est stockée l'information.

7. Système (34) selon la revendication 5 ou 6, **caractérisé en ce que** la plage de valeurs normales (20) est une plage de valeurs normales individuelles dudit au moins un accumulateur d'énergie (16).

8. Système (34) selon l'une des revendications 5 à 7, **caractérisé en ce que** ledit au moins un accumulateur d'énergie (16) est destiné à transmettre l'information au chargeur de batterie (10).

9. Procédé d'étalonnage initial d'un système (34) selon l'une des revendications 5 à 8, dans lequel, lors d'une étape d'étalonnage (38), une courbe d'étalonnage (40) de l'accumulateur d'énergie (16) est déterminée de manière à ce que la courbe d'étalonnage (40) comprenne des points (24, 26, 28) qui caractérisent un facteur de qualité déterminé à une fréquence de résonance déterminée pour différentes distances dudit au moins un dispositif de stockage d'énergie (16) par rapport à une unité de charge d'étalonnage en l'absence d'un facteur perturbateur ou lorsque le facteur perturbateur est insignifiant, et à ce que, lors d'une étape de stockage (42), une information qui comprend la courbe d'étalonnage (40) soit stockée dans ledit au moins un accumulateur d'énergie (16) .

10. Procédé selon la revendication 9, **caractérisé en ce que**, lors d'une autre étape d'étalonnage (58), un facteur de qualité et une fréquence de résonance de l'unité de charge (14) en l'absence dudit au moins un accumulateur d'énergie (16) sont déterminés pour établir une plage de valeurs de base (32) pour une caractéristique de charge nulle.
